## Europäisches Patentamt

## European Patent Office

## Office européen des brevets

(11) Veröffentlichungsnummer: **0 284 877 B1**

# EUROPÄISCHE PATENTSCHRIFT

(45) Veröffentlichungstag der Patentschrift:
06.03.91 Patentblatt 91/10

(51) Int. Cl.⁵: **A01C 11/02**

(21) Anmeldenummer: **88104076.0**

(22) Anmeldetag: **15.03.88**

(54) Pflanzmaschine.

(30) Priorität: **02.04.87 DE 3711097**

(43) Veröffentlichungstag der Anmeldung:
**05.10.88 Patentblatt 88/40**

(45) Bekanntmachung des Hinweises auf die Patenterteilung:
**06.03.91 Patentblatt 91/10**

(84) Benannte Vertragsstaaten:
**AT BE CH DE FR GB IT LI NL**

(56) Entgegenhaltungen:
**GB-A- 886 146**
**GB-A- 2 114 413**
**US-A- 2 348 787**
**US-A- 2 565 548**
**US-A- 2 622 550**
**US-A- 4 253 411**
**US-A- 4 455 950**

(73) Patentinhaber: **Scheffer, Konrad, Prof. Dr. Dipl. agr.**
**Grosser Bruch 15**
**W-3403 Friedland 1 (DE)**
Patentinhaber: **Kaiser, Christian, Dr.agr.**
**Hess. Staatsdomäne Kinzigheimer Hof**
**W-6454 Bruchköbel (DE)**

(72) Erfinder: **Scheffer, Konrad, Prof. Dr. Dipl. agr.**
**Grosser Bruch 15**
**W-3403 Friedland 1 (DE)**
Erfinder: **Kaiser, Christian, Dr.agr.**
**Hess. Staatsdomäne Kinzigheimer Hof**
**W-6454 Bruchköbel (DE)**

(74) Vertreter: **Jochem, Bernd, Dipl.-Wirtsch.-Ing.**
**Patentanwälte Beyer & Jochem Postfach 17 41 09**
**W-6000 Frankfurt/Main (DE)**

## Beschreibung

Die Erfindung betrifft eine aus der US-A-4455950 bekannte Pflanzmaschine mit paarweise zusammenwirkenden elastischen Pflanzscheiben, zwischen denen die von einer Fördereinrichtung herangeführten Pflanzen mit im wesentlichen radial nach außen weisenden Wurzeln durch Änderung der Breite des Umfangsspalts infolge elastischer Verformung der Pflanzscheiben mittels innerer und/oder äußerer Führungskörper festklemmbar und während eines Teils einer Umdrehung bis in eine Pflanzrinne im Boden mitnehmbar sind, wobei die Fördereinrichtung aus einer oder mehreren in Fahrtrichtung vor den Pflanzscheiben gelagerten, antreibbaren Rollen besteht, durch welche ein die Pflanzen mit bestimmtem Zwischenabstand haltendes Band von einem Vorrat über eine neben dem Umfang der Pflanzscheiben angeordnete Umlenkeinrichtung, an welcher es von den zwischen die Pflanzscheiben eingeführten Pflanzen trennbar ist, zu fördern und fortlaufend aufwickelbar ist.

Das Pflanzen mittels Pflanzscheiben ist eine seit langem bekannte Technik, die z. B. auch bei den Pflanzmaschinen gemäß DE-AS 1 047 512, CH-PS 409 497 und DE-OS 34 22 655 Anwendung findet. In den genannten Fällen werden die Pflanzen von einer Seite her oben an die verhältnismäßig kleinen Pflanzscheiben herangeführt, deren Umfangsspalt durch gegenseitige Schrägstellung der beiden Drehachsen derart eingestellt ist, daß die Umfangsränder der Pflanzscheiben mit Bezug auf die Fahrtrichtung hinten einen breiten Spalt bilden, der sich oben nach vorn hin bis zur gegenseitigen Anlage verjüngt und unten wieder öffnet. Es besteht dabei kaum eine Möglichkeit, die Klemmkraft, mit der die Pflanzscheiben die Pflanzen erfassen, entsprechend den Besonderheiten des Einzelfalls zu variieren. Es ist deshalb auch bereits bekannt (US-PS 2 348 787, US-PS 2 565 548, US-PS 2 622 550), verhältnismäßig große, elastisch verformbare Pflanzscheiben zu verwenden und den Umfangsspalt mittels innerer und/oder äußerer Führungskörper auf das für jeden Umfangsabschnitt gewünschte Maß einzustellen.

Es ist weiterhin aus der US-PS 4 253 411, der GB-PS 886 146 und der US-A-4455950, die zusätzlich auch Verformbare Pflanzscheiben aufweist, bekannt, die Pflanzen mittels eines sie tragenden Bandes jeweils einzeln an derartige Pflanzscheiben heranzuführen, an einer Umlenkeinrichtung für das Band die Pflanzen mit dem Einführen ihres blättrigen Teils in den Spalt zwischen den Pflanzscheiben gleichzeitig loszulassen und das leere Band fortlaufend aufzuwickeln. Diese bekannten Pflanzmaschinen halten jedoch den Vorrat der durch das Band verbundenen Pflanzen in Form einer um eine horizontale Achse drehbar gelagerten Spule. Dies hat mehrere Nachteile : Damit die Pflanzen in liegender Stellung zuverlässig gehalten und gefördert und dann an der Umlenkeinrichtung an die Pflanzscheiben übergeben werden können, muß das Band selbst verhältnismäßig dick und steif sein, so daß schon eine kurze Bandlänge mit nur wenigen Pflanzen eine große Spule bildet. Führt man das Band auf seinem Weg von der Vorratsspule zur Aufwickelspule im wesentlichen tangential oben an den Pflanzscheiben vorbei, müssen diese über den halben Umfang zusammengedrückt und die Pflanzen auf einem verhältnismäßig langen Weg leicht geklemmt gehalten werden, wobei die Gefahr besteht, daß sie ihre Lage ändern oder sich lösen können. Außerdem ergibt sich durch die Lagerung der großen Pflanzscheiben und der großen Vorratsspule übereinander ein sehr hoher, für das Nachladen unzweckmäßiger Maschinenaufbau. Führt man dagegen das Band mit den Pflanzen gemäß GB-PS 886 146 von der Seite an den vorderen Umfangsbereich der Pflanzscheiben heran, können höchstens zwei Pflanzscheibenpaare nebeneinander angeordnet werden.

Der Erfindung liegt daher die die Aufgabe zugrunde, eine Pflanzmaschine der eingangs genannten Art zu schaffen, welche auch bei mehreren parallel arbeitenden Pflanzscheiben und einem großen Vorrat an mitzuführenden Pflanzen diese selbst bei Verwendung eines sehr dünnen Bandes zuverlässig lagert und leicht nachzuladen ist.

Vorstehende Aufgabe wird erfindungsgemäß dadurch gelöst, daß sich eine Plattform zur Lagerung des Vorrats, in Fahrtrichtung gesehen, vor den Pflanzscheiben befindet, daß die Rollen der Fördereinrichtung sich unterhalb dieser Plattform befinden, und daß die Umlenkeinrichtung unmittelbar vor dem Umfang der Pflanzscheiben angeordnet ist, so daß das Band in Fahrtrichtung von vorn nach hinten von der Plattform über die Umlenkeinrichtung nach unten abgezogen und von den Rollen aufgewickelt wird.

Die Erfindung bietet den Vorteil, daß das Band nicht den Vorrat an Pflanzen in Form einer Spule tragen muß, sondern die Pflanzen unmittelbar von der sie tragenden Plattform im vorderen Umfangsbereich an die Pflanzscheiben übergeben werden können, so daß sie von diesen nur noch über einen verhältnismäßig kleinen Winkelbereich von vorzugsweise etwa 90-120° in die Pflanzrinne transportiert zu werden brauchen. Es können drei oder mehr Pflanzscheibenpaare mit zugeordneten Plattformen nebeneinander vorhanden sein und eine entsprechende Anzahl Reihen Pflanzen gleichzeitig gesetzt werden. Da der Vorrat an Pflanzen auf einer Plattform gelagert ist, können dünne Bänder Verwendung finden, die sich nach der Übergabe der Pflanzen an die Pflanzscheiben in großer Länger zu einer im Durchmesser kleinen Spule aufwickeln lassen, welche daher noch unterhalb der Plattform gelagert sein kann.

Die neue Pflanzmaschine eignet sich besonders für Pflanzen, die in einem dünnen, rinnenförmig gebogenen Folienstreifen stehend vorgezogen worden qind, wie dies z. B. in der DE-OS 34 22 655 gezeigt ist. Die Pflanzen können auf der Plattform vor den Pflanzscheiben aufrecht stehen und bei ihrer Bewegung auf die Pflanzscheiben zu vornüber in den Umfangsspalt kippen. Alternativ könnten die Pflanzen auch zunächst liegen und dann unmittelbar vor den Pflanzscheiben durch Führungselemente aufgerichtet werden.

Um bei gleichem Zwischenabstand der Pflanzen längs des sie haltenden Bandes mit unterschiedlichen Pflanzabständen arbeiten zu können, sieht eine praktische Ausführungsform der Erfindung vor, daß die Fördergeschwindigkeit der Fördereinrichtung relativ zur Umfangsgeschwindigkeit der Pflanzscheiben variabel und einstellbar ist.

In weiterer zweckmäßiger Ausgestaltung der Erfindung haben die Pflanzscheiben einen Durchmesser von etwa 80 bis 120 cm, vorzugsweise etwa 100 cm, und die Führungskörper sind nahe dem äußeren Umfang der Pflanzscheiben angeordnete, um mit Bezug auf deren Mittelachsen radial ausgerichtete Drehachsen frei drehbare Rollen. Die genannte Größe der Pflanzscheiben ist förderlich für die Flexibilität der Scheiben. Man ist nicht nur auf Stahlscheiben angewiesen, sondern kann z. B. auch Scheiben aus Kunststoff verwenden. Gute Erfahrungen wurden mit Scheiben aus Acrylglas gesammelt.

In zweckmäßiger Praktischer Ausführung wird das die Pflanzen haltende Band durch eine erste Rolle, deren Umfangsgeschwindigkeit in einem bestimmten Verhältnis zur Umfangsgeschwindigkeit der Pflanzscheiben steht, über die Umlenkeinrichtung von der Plattform und den Pflanzen abgezogen und durch eine zweite, unabhängig von der ersten und mit Schlupfmöglichkeit angetriebene Rolle aufgewickelt. Man vermeidet auf diese Weise die Schwierigkeit, eine Aufwickelrolle, deren Durchmesser während des Aufwickelns immer größer wird, mit einer in Abhängigkeit von der Umfangsgeschwindigkeit der Pflanzscheiben gesteuerten oder auch nur konstanten Bandgeschwindigkeit anzutreiben.

Die Erfindung wird nachstehend anhand eines in der Zeichnung dargestellten Ausführungsbeispiels näher erläuter. Es zeigen :

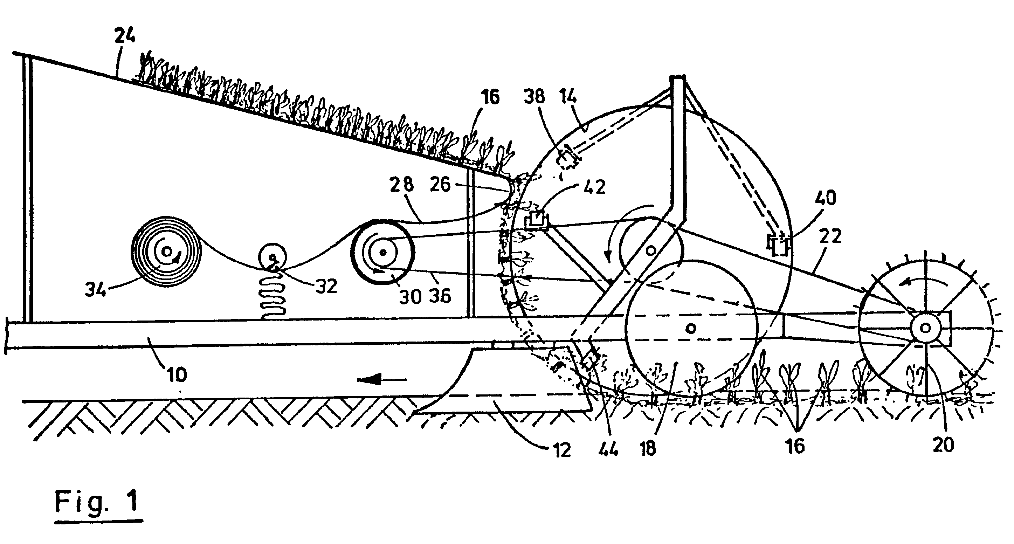

Fig. 1 eine vereinfachte Seitenansicht einer Pflanzmaschine gemäß der Erfindung ;

Fig. 2 eine Draufsicht auf die wesentlichen Teile der Vorrichtung nach Fig. 1.

Die dargestellte Pflanzmaschine hat einen Rahmen 10 mit nicht gezeigten Rädern, so daß er z. B. von einem Traktor gezogen werden kann. In herkömmlicher Weise ist an der

Unterseite des Rahmens 10 ein Schar 12 befestigt, das während der Fahrt (mit Bezug auf die Zeichnung nach links) im Boden eine Pflanzrinne erzeugt. Hinter dem Schar 12 ist am Rahmen 10 ein Paar Pflanzscheiben 14 gelagert. Die Pflanzscheiben bewegen sich in bekannter Weise längs der Pflanzrinne, um Pflanzen 16 darin einzusetzen. Bei der gezeigten Pflanzmaschine haben die Pflanzscheiben 14 jedoch einen wesentlich größeren Durchmesser als bisher üblich. Im Beispielsfall beträgt er 1 m. Wie bekannt, sind seitlich hinter den Pflanzscheiben 14 zwei auf dem Boden laufende Druckrollen 18 am Rahmen 10 gelagert, die normalerweise schräg gestellt sind und Erde in die Pflanzrinne drücken, so daß diese wieder geschlossen und die zuvor von den Pflanzscheiben 14 in die Pflanzrinne eingesetzten Pflanzen 16 mit ihren Wurzeln von Erde umschlossen und festgelegt werden.

Um die Pflanzscheiben 14 anzutreiben, ist hinter diesen am Rahmen 10 ein Antriebsrad 20 gelagert, welches mit Stollen oder Zähnen in den Boden eingreift und über eine Kette 22 oder einen Riemen sowie Kettenräder bzw. Riemenscheiben auf den Wellen des Antriebsrads 20 und der Pflanzscheiben 14 die letzteren mit gleicher Drehrichtung mitnimmt. Normalerweise wird man die Übersetzung des Ketten- bzw. Riementriebs 22 so wählen, daß die Pflanzscheiben 14 trotz größeren Durchmessers mit derselben Umfangsgeschwindigkeit wie das Antriebsrad 20 umlaufen.

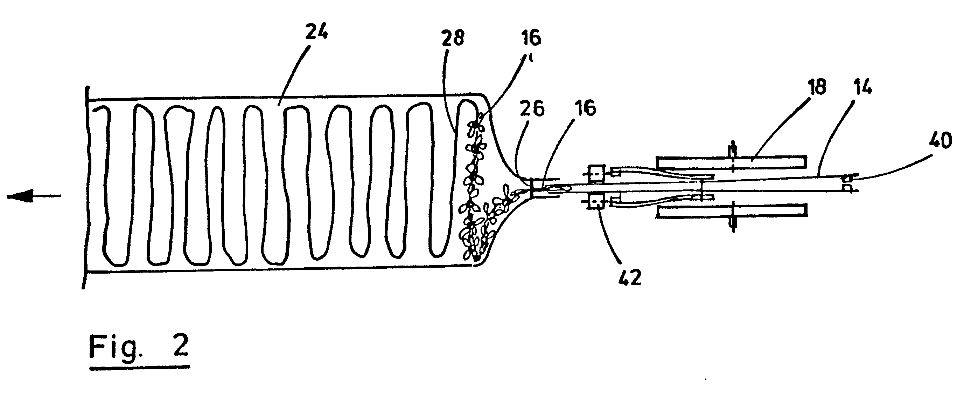

Vor den Pflanzscheiben 14 ist am Rahmen 10 eine Plattform 24 fest angebracht, auf der in Paketen zusammengefaßte, vorgezogene Pflanzen abgesetzt werden können. Im Ausführungsbeispiel stehen die Pflanzen 16 auf der Plattform 24 aufrecht in einer Folienrinne gemäß DE-OS 34 22 655, und diese ist gemäß Fig. 2 im Paket zickzackförmig gelegt. Damit die Pflanzen auf der Plattform 24 besser zu den Pflanzscheiben hin gefördert werden, ist die Plattform geneigt. Aufrechte Randstege auf der Plattform 24 laufen am hinteren Ende der Plattform trichterförmig zusammen, wie dies in Fig. 2 gezeigt ist, so daß nicht das Pflanzenpaket auf seiner gesamten Breite von der Plattform herunterrutschen kann, sondern lediglich die Folienrinne mit den darin stehenden Pflanzen über das abgerundete hintere Ende der Plattform 24 nach unten abgezogen werden kann. Dieses abgerundete Ende, an dessen Stelle auch eine drehbar gelagerte Rolle treten könnte, stellt eine Umlenkeinrichtung 26 dar, an welcher das die Pflanzen 16 auf der Plattform 24 haltende Band 28, d.h. der zur Folienrinne gewölbte Folienstreifen, der bis dahin auf der Plattform 24 zu den Pflanzscheiben 14 hin gezogen wird, nunmehr nach unten und vorn umgelenkt und unterhalb der Plattform 24 von den Pflanzscheiben 14 fortgezogen wird. Beim Umlenken an der Umlenkeinrichtung 26 kippen die durch Führungsstege seitlich geführten Pflanzen 16 vornüber in den an dieser Stelle des Umfangs der Pflanzscheiben weit genug geöffneten Umfangsspalt zwischen den Pflanzscheiben 14 und werden in dem sich sofort darunter verengenden Umfangsspalt von den Pflanzscheiben erfaßt und dann zur Pflanzrinne hin mitgeführt.

Während die Pflanzen 18 an der Umlenkeinrichtung 26 einzeln nacheinander in dem Umfangsspalt zwischen den Pflanzscheiben 14 eingeklemmt werden, lösen sie sich vom Folienstreifen 28. Dieser ist ein oder mehrmals um eine unter der Plattform 24 am Rahmen 10 gelagerte angetriebene Rolle 30 geschlungen und dann weiter in Fahrtrichtung nach vorn über eine Spanneinrichtung 32 zu einer ebenfalls am Rahmen 10 gelagerten

Aufwickelrolle 34 geführt. Die Rolle 30 wird durch das Antriebsrad 20 über einen Ketten- oder Riementrieb 36 angetrieben, wobei im Beispielsfall die Kette bzw. der Riemen über Kettenräder bzw. Riemenscheiben auf den Wellen der Rolle 30 und der Pflanzscheiben 1 geführt ist. Diese Kettenräder bzw. Riemenscheiben sind leicht auszuwechseln, so daß die Abzugsgeschwindigkeit des Folienstreifens 28 relativ zur Umfangsgeschwindigkeit der Pflanzscheiben 1 und damit bei gleichbleibendem Abstand der Pflanzen 16 in der Folienrinne 28 der Pflanzabstand verändert werden kann.

Die Spanneinrichtung 32 besteht im Beispielsfall aus einer zwischen den Rollen 30 und 34 gegen den Folienstreifen 28 gedrückten Spannrolle. Die Aufwickelrolle 24 wird unabhängig von der Rolle 30 durch einen Ölmotor angetrieben, der während der Fahrt ständig ein verhältnismäßig schwaches, zum Aufwickeln des Folienstreifens 28 ausreichendes Drehmoment erzeugt und auch dann mit dem entsprechenden Schlupf weiterläuft, wenn von der den Folienstreifen 28 von der Plattform 24 ziehenden Rolle 30 nur wenig oder keine Streifenlänge nachgezogen wird.

Eine Besonderheit der gezeigten Pflanzmaschine besteht darin, daß die Pflanzscheiben 14 koaxial nebeneinander gelagert sind. Der gewünschte Umfangsspalt zwischen den Pflanzscheiben 14 wird durch am Rahmen 10 gelagerte innere und äußere Führungsrollen eingestellt. Im Beispielsfall sind vier Paare von Führungsrollen vorgesehen, nämlich zwei Paare innerer Führungsrollen 38 und 40 und zwei Paare äußerer Führungsrollen 42 und 44. Die inneren Führungsrollen 38 und 40 sorgen dafür, daß neben der Umlenkeinrichtung 26 ein zum Einführen der grünen Pflanzenteile ausreichend breiter Umfangsspalt zwischen den Pflanzscheiben 14 vorhanden ist. Zu diesem Zweck drücken die letztgenannten Führungsrollen gegen die Innenseiten der Pflanzscheiben, wobei sich diese elastisch verformen. Die äußeren Führungsrollen 42 und 44 sind derart am Umfang der Pflanzscheiben 14 angeordnet, daß sie den Umfangsspalt nach dem Einführen der Pflanzen 16 an der Umlenkeinrichtung 76 sehr schnell auf einem sehr viel kürzeren Umfangsabschnitt als bei schräg zueinander gelagerten Pflanzscheiben verjüngen und gegebenenfalls ganz schließen, so daß die Pflanzen 16 mit nach außen abstehenden Wurzeln eingeklemmt werden. Die äußeren Führungsrollen 44 im vorderen, unteren Bereich der Pflanzscheiben 16 bewirken, daß der Umfangsspalt zwischen den Pflanzscheiben 14 bis in die Pflanzrinne geschlossen bleibt, und die im hinteren Bereich der Pflanzscheiben 14 angeordneten inneren Führungsrollen 40 sorgen dann dafür, daß sich der Umfangsspalt in der Pflanzrinne wieder öffnet und die Pflanzen 16 nach unten herausfallen können.

Die Führungsrollen 38-44 laufen im Beispielsfall frei drehbar auf mit Bezug auf die Drehachse der Pflanzscheiben 14 radial ausgerichteten Achsen. Um die Weite des Umfangsspalts je nach Art der Pflanzen zu verändern, können entweder die Lager der Führungsrollen 38-44 am Rahmen 10 z.B. mittels Exzenterbüchsen verstellbar sein, oder es können die Führungsrollen gegen andere Führungsrollen mit einem größeren oder kleineren Durchmesser ausgewechselt werden. Schließlich kann durch Auswechseln der Tagarme am Rahmen 10, an welchen die Führungsrollen 38-44 gelagert sind, deren Lage am Umfang der Pflanzscheiben 14 verändert werden. Es können im Einzelfall auch mehr oder weniger Paare von Führungsrollen als im Ausführungsbeispiel gezeigt verwendet werden.

Da das Material der Pflanzscheiben 14, sei es z.B. Stahl oder Kunststoff, normalerweise verhältnismäßig hart ist, kann man zur Vermeidung der Verletzung empfindlicher Pflanzen die Pflanzscheiben 14 innen z.B. mit Moosgummi oder Schaumkunststoff bekleben. Dies ist z.B. auch dann angebracht, wenn die Pflanzen 16 eine stärker schwankende Größe haben, denn mittels der Führungsrollen 38-44 wird ein genau definierter Umfangsspalt zwischen den Pflanzscheiben 14 erzeugt. Alternativ besteht die Möglichkeit, die Führungsrollen 38-44 elastisch federnd gegen die Pflanzscheiben 14 anzudrücken. Dies geschieht normalerweise in der Nähe des äußeren Umfangs der Pflanzscheiben 14, kann aber gegebenenfalls auch radial weiter innen erfolgen.

Da bei der beschriebenen Pflanzmaschine ein nach Breite und Lage am Umfang genau definierter Umfangsspalt zwischen den Pflanzscheiben 14 vorhanden ist, kann dieser auf ca. 90 bis 120° am Umfang begrenzt werden, so daß die Umlenkeinrichtung 26 am hinteren Ende der Plattform 24 etwa in mittlerer Höhe der Pflanzscheiben 14 unmittelbar vor diesen liegen kann. Infolge der Größe der Pflanzscheiben 14 steht dann immer noch genügend Raum unter der Plattform 24 für die Fördereinrichtung 30, 34 für das Band bzw. den Folienstreifen 28 zur Verfügung, mit dessen Hilfe die Pflanzen 16 einzeln nacheinander den Pflanzscheiben 14 zugeführt werden. Es ist auch für die Pflanzen vorteilhaft, wenn diese nur mit verhältnismäßig kleiner Winkelgeschwindigkeit lediglich über den genannten Winkelbereich zwischen den Pflanzscheiben eingeklemmt gehalten und in die Pflanzrinne mitgeführt werden. Schließlich ergibt sich aus der genannten Anordnung der Umlenkeinrichtung 26 vor den Pflanzscheiben 14 der große Vorteil, daß die Pflanzen direkt von vorn den Pflanzscheiben 14 zugeführt werden können, mit dem weiteren daraus folgenden Vorteil, daß ohne weiteres mehrere Paare von Pflanzscheiben 14 nebeneinander am Rahmen 10 gelagert werden können, um gleichzeitig mehrere parallele Pflanzrinnen zu erzeugen und zu bepflanzen. Es versteht sich, daß dann entsprechend der Anzahl der Pflanzscheibenpaare 14 mehrere Umlenkeinrichtungen 26 mit seitlichen Führungsborden an einer oder mehreren Plattformen 24 vorhanden sind, um mehrere Bänder bzw. Folienstreifen 28 mit Pflanzen 16 abzuziehen und aufzuwickeln. Dabei können die parallel angeordneten Pflanzscheibenpaare 14 und jeweils zugehörigen Fördereinrichtungen 30, 34 gegebenenfalls einen gemeinsamen Antrieb haben. Bei seitlicher Zuführung der Pflanzen 16 und Einführung zwischen die Pflanzscheiben 14 von oben ließe sich eine Parallelanordnung mehrerer Pflanzscheibenpaare nicht oder nur mit großem konstruktivem Aufwand verwirklichen.

Hinzu kommt in diesem Fall der Vorteil, daß die Pflanzmaschine nicht mehr störungsanfällig ist, weil die Pflanzen 16 von der Plattform 24 unmittelbar an die Pflanzscheiben 14 übergeben werden. Sie werden dort an einer ganz bestimmten Umfangsstelle sicher erfaßt, so daß sich danach sofort der Folienstreifen 28 ebenfalls mit Sicherheit von den inzwischen von den Pflanzscheiben 14 gehaltenen Pflanzen 16 abziehen läßt. Indem die Umfangsgeschwindigkeit der Pflanzscheiben 14 durch geeignete Wahl des Übersetzungsverhältnisses des Kettentriebs 36 größer gewählt wird als die Abzugsgeschwindigkeit des Folienstreifens 28 mittels der Rolle 30, besteht die Möglichkeit, die Pflanzen 16 mit optimal kleinem Zwischenabstand in die durch den Folienstreifen 18 gebildete Rinne einzusetzen, dann aber mit einem wesentlich größeren Zwischenabstand auszupflanzen.

Abweichend vom dargestellten Ausführungsbeispiel könnte der Folienstreifen 28 auch auf die Rolle 30 aufgewickelt werden, wenn deren Drehgeschwindigkeit so geregelt wird, daß sich unabhängig vom Durchmesser der bereits auf der Rolle 30 vorhandenen Wicklung im Verhältnis zur Umfangsgeschwindigkeit der Pflanzscheiben 14 eine bestimmte Abzugsgeschwindigkeit des Folienstreifens 28 über die Umlenkeinrichtung 26 ergibt.

Die Stärke der Pflanzscheiben 14 aus Acrylglas beträgt bei einer praktisch ausgeführten Pflanzmaschine 6 mm. Es versteht sich, daß die Pflanzscheiben, insbesondere bei Verwendung eines anderen Materials, auch eine andere Dicke haben können, sofern die funktionsnotwendige Flexibilität hinsichtlich der Biegung durch die Führungsrollen 38-44 gewährleistet ist.

Bei einer weiteren abgewandelten Ausführungsform werden die Pflanzen auf der Plattform nicht durch deren Neigung, sondern durch ein Förderorgan, z. B. einen Bandförderer, zu demjenigen Ende der Plattform hin befördert, von welchem sie von dieser abgezogen werden.

## Ansprüche

1. Pflanzmaschine mit paarweise zusammenwirkenden elastischen Pflanzscheiben (14), zwischen denen die von einer Fördereinrichtung (30, 34) herangeführten Pflanzen (16) mit im wesentlichen radial nach außen weisenden Wurzeln durch Änderung der Breite des Umfangsspalts infolge elastischer Verformung der Pflanzscheiben (14) mittels innerer und-/oder äußerer Führungskörper (38-44) festklemmbar und während eines Teils einer Umdrehung bis in eine Pflanzrinne im Boden mitnehmbar sind, wobei die Fördereinrichtung aus einer oder mehreren in Fahrtrichtung vor den Pflanzscheiben (14) gelagerten, antreibbaren Rollen (30, 34) besteht, durch welche ein die Pflanzen (16) mit bestimmtem Zwischenabstand haltendes Band (28) voneinem Vorrat (auf 24) über eine neben dem Umfang der Pflanzscheiben (14) angeordnete Umlenkeinrichtung (26), an welcher es von den zwischen die Pflanzscheiben (14) eingeführten Pflanzen (16) trennbar ist, zu fördern und fortlaufend aufwickelbar ist, **dadurch gekennzeichnet,** daß sich eine Plattform (24) zur Lagerung des Vorrats, in Fahrtrichtung gesehen, vor den Pflanzscheiben (14) befindet, daß die Rollen (30, 34) der Fördereinrichtung sich unterhalb dieser Plattform (24) befinden, und duß die Umlenkeinrichtung (26) unmittelbar vor dem Umfang der Pflanzscheiben (14) angeordnet ist, so daß das Band (28) in Fahrtrichtung von vorn nach hinten.von der Plattform (14) über die Umlenkeinrichtung (26) nach unten abgezogen und von den Rollen (30, 34) aufgewickelt wird.

2. Pflanzmaschine nach Anspruch 1, **dadurch gekennzeichnet,** daß die Fördergeschwindigkeit der Fördereinrichtung (30, 34) relativ zur Umfangsgeschwindigkeit der Pflanzscheiben (14) variabel und einstellbar ist.

3. Pflanzmaschine nach Anspruch 1 oder 2, **dadurch gekennzeichnet,** daß die Pflanzscheiben einen Durchmesser von etwa 80-120 cm haben und die Führungskörper (38-44) nahe dem äußeren Umfang der Pflanzscheiben (14) angeordnete, um mit Bezug auf deren Mittelachse radial ausgerichtete Drehachsen frei drehbare Rollen sind.

4. Pflanzmaschine nach einem der Ansprüche 1 bis 3, **dadurch gekennzeichnet,** daß die Pflanzen (16) von den Pflanzscheiben (14) nur über einen Umfangsbereich von etwa 90 bis 120° im eingeklemmten Zustand mitnehmbar sind.

5. Pflanzmaschine nach einem der Ansprüche 1 bis 4, **dadurch gekennzeichnet,** daß die Plattform (24) zu der Randkante hin, über welche die Pflanzen abgezogen werden, geneigt ist.

6. Pflanzmaschine nach einem der Ansprüche 1 bis 5, **dadurch gekennzeichnet**, daß das die Pflanzen (16) haltende Band (28) durch eine erste Rolle (30) deren Umfangsgeschwindigkeit in einem bestimmten Verhältnis zur Umfangsgeschwindigkeit der Pflanzscheiben (14) steht, über die Umlenkeinrichtung (26) von der Plattform (24) und den Pflanzen (16) abziehbar und durch eine zweite, unabhängig von der ersten und mit Schlupfmöglichkeit angetriebene Rolle (34) aufwikkelbar ist.

7. Pflanzmaschine nach einem der vorhergehenden Ansprüche, **dadurch gekennzeichnet**, daß mehrere Paare von Pflanzscheiben (14) nebeneinander gelagert und mit jeweils einer in Fahrtrichtung davor angeordneten Fördereinrichtung (30, 34) für die Zufuhr von durch ein Band (28) gehaltenen Pflanzen (16) zusammenwirken.

8. Pflanzmaschine nach einem der vorhergehenden Ansprüche, **dadurch gekennzeichnet**, daß auf der Plattform (24) zur Umlenkeinrichtung (26) hin trichterförmig zusammenlaufende Randstege als Führung für die in einem rinnenförmig gebogenen band (28) stehenden Pflanzen (16) angeordnet sind, wobei die hintere Randkante der Plattform (24) selbst oder eine dort gelagerte Rolle die Umlenkeinrichtung bildet, über welche das Band (28) nach unten abziehbar ist und dabei die Pflanzen (16) in den Umfangsspalt der Pflanzscheiben (14) kippbar sind.

## Claims

1. Planting machine with flexible planting discs acting in pairs (14), between which the plants (16) advanced by conveying equipment (30, 34) with their roots essentially pointing outwards in a radial fashion can be clamped and carried by changing the width of the peripheral aperture as a result of elastic deformation of the planting discs (14) using internal and/or external guides (38-44), the plants being carried into a planting channel in the soil during part of a revolution, and the conveying equipment consisting of one or more drivable rollers (30, 34) mounted on bearings ahead of the planting discs in the direction of travel, by means of which a belt (28), which holds the plants (16) with set intervals between them, is drawn out from and can be continuously taken up by a belt supply (on 24), passing over a deflection device (26) located adjacent to the periphery of the planting discs (14) and being separable from the plants (16) inserted between the planting discs (14) at this deflection device (26), characterised by the fact that a platform (24) for storing the belt supply is located ahead of the planting discs (14) viewed in the direction of travel, that the rollers (30, 34) of the conveying equipment are situated below this platform (24) and that the deflection device (26) is located directly upstream of the periphery of the planting discs (14), so that the belt (28) is pulled off the platform (24) downwards over the deflection device (26) with a direction of travel from front to back and is taken up by the rollers (30, 34).

2. Planting machine in accordance with Claim 1, characterised by the fact that the conveying speed of the conveying equipment (30, 34) is variable and adjustable relative to the peripheral speed of the planting discs (14).

3. Planting machine in accordance with Claims 1 or 2, characterised by the fact that the planting discs have a diameter of some 80 to 120 cm and that the guides (38-44) are located close to the external periphery of the planting discs (14) and are rollers freely rotating about axes of rotation aligned radially with reference to their centre line.

4. Planting machine in accordance with one of Claims 1 to 3, characterised by the fact that the plants (16) can be clamped and carried by the planting discs (14) over a peripheral area of only some 90 to 120°.

5. Planting machine in accordance with one of Claims 1 to 4, characterised by the fact that the platform (24) is inclined towards the edge over which the plants are drawn off.

6. Planting machine in accordance with one of Claims 1 to 5, characterised by the fact that the belt (28) holding the plants (16) can be drawn off from the platform (24) and the plants (16) by a first roller (30), the peripheral speed of which is at a specific ratio to the peripheral speed of the planting discs (14), over the deflection device (26), and can be taken up by a second roller (34) which is independent of the first roller (30) and driven with the possibility of slippage.

7. Planting machine in accordance with one of the above Claims, characterised by the fact that several planting discs (14) acting in pairs are mounted on bearings adjacent to one another, each pair with conveying equipment (30, 34) located ahead of it in the direction of travel for feeding plants (16) held by a belt (28).

8. Planting machine in accordance with one of the above Claims, characterised by the fact that edge ridges are located running together to form a funnel shape on the platform (24) leading towards the deflection device (26), serving as a guide for the plants (16) which are located in a belt (28) bent to form a channel, the rear edge of the platform (24) itself or a roller mounted on bearings there forming the deflection device over which the belt (28) can be drawn off downwards so that the plants (16) can be tipped into the peripheral aperture of the planting discs (14).

## Revendications

1. Machine à planter avec deux disques de plantes (14) élastiques coopérant par paire, entre lesquels les plantes (16) apportées par un dispositif de convoyage (30, 34) avec les racines présentées essentiellement radialement vers l'extérieur par modification de la largeur de la fente périphérique par déformation des disques de plantes (14) au moyen d'un corps de guidage (38, 44) interne ou externe, sont susceptibles d'être saisies et entraînées pendant une partie de la rotation jusqu'à un sillon du sol, le dispositif d'entraînement étant constitué d'une ou plusieurs poulies (30, 34) entraînées placées en avant des disques de plantes (14) dans le sens de déplacement, grâce auxquelles une bande (28) portant les plantes (16) à intervalles réguliers se déroule depuis une réserve (sur 24) en passant sur un dispositif de renvoi (26) placé à proximité de la périphérie des disques de plantes (14), sur lequel on prélève les plantes (16) insérées dans les disques de plantes (14), caractérisée en ce qu'il y a une plateforme (24) pour conserver la réserve, en avant du disque de plantes (14) vu dans le sens d'avancement, que les poulies (30, 34) du dispositif d'entraînement se trouvent endessous de cette plate-forme (24), et qu'on a placé le dispositif de renvoi (26) immédiatement avant la périphérie des disques de plantes (14), de sorte que la bande (28) est tirée vers le bas dans le sens d'avancement, de l'avant vers l'arrière de la plate-forme (14), en passant sur le dispositif de renvoi (26), et qu'elle est enroulée par les poulies (30, 34).

2. Machine à planter selon la revendication 1, caractérisée en ce qu'on peut faire varier et régler la vitesse d'avancement du dispositif d'entraînement (30, 34) par rapport à la vitesse périphérique des disques de plantes (14).

3. Machine à planter selon la revendication 1 ou 2, caractérisée en ce que les disques de plantes ont un diamètre d'environ 80-120 cm et qu'on place les corps de guidage (38, 44) à proximité de la périphérie externe des disques de plantes (14) et ce sont des poulies libres tournant sur leurs axes disposés radialement par rapport à l'axe médian des disques de plantes.

4. Machine à planter selon l'une des revendications 1 à 3, caractérisée en ce qu'on peut prélever par pinçage les plantes (16) avec les disques de plantes (14) seulement sur un intervalle angulaire d'environ 90 à 120°.

5. Machine à planter selon l'une des revendications 1 à 4, caractérisée en ce qu'on incline la plateforme (24) vers le bord périphérique où sont prélevées les plantes.

6. Machine à planter selon l'une des revendications 1 à 5, caractérisée en ce que la bande (28), maintenant les plantes (16), et susceptible de s'enrouler sur une première poulie (30), dont la vitesse périphérique est dans un rapport déterminé vis-à-vis de la vitesse périphérique des disques de plantes (14), par l'intermédiaire du dispositif de renvoi (26) depuis la plate-forme (24), en détachant les plantes (16), et s'enroule sur une deuxième poulie (34) entraînée, indépendamment de la première et avec possibilité de glissement.

7. Machine à planter, selon l'une des revendications précédentes, caractérisée en ce qu'on place plusieurs paires de disques de plantes (14) côte à côte, chaque paire ayant en avant, dans le sens de progression un dispositif d'entraînement (30, 34), pour le guidage de plantes (16) portées par une bande (28).

8. Machine à planter selon l'une des revendications précédentes, caractérisée en ce que sur la plate-forme (24) on a déposé les plantes (16) mises en position verticale par rapport à la direction du dispositif de renvoi (26), le long des bordures assemblées en forme d'entonnoir jouant le rôle de guidage pour la bande (28) en forme de goulotte ; le bord inférieur de la plate-forme (24) même, où une poulie montée sur palier forme le dispositif de renvoi sur lequel la bande (28) peut être entraîné vers le bas et ainsi on bascule les plantes (16) dans la fente périphérique des disques de plantes (14).

Fig. 1

EP 0 284 877 B1

Fig. 2

EP 0 284 877 B1